# EUROPEAN PATENT APPLICATION

(11) **EP 4 175 163 A1**
(43) Date of publication of application: **03.05.2023**
(21) Application number: 21205357.3
(22) Date of filing: 28.10.2021
(51) Int. Cl.: H02P 9/48

(54) **ELECTRICAL POWER SUPPLY SYSTEM FOR A MOTOR VEHICLE**

(71) Applicant: MAHLE International GmbH, 70376 Stuttgart (DE)
(72) Inventor: BATISTIC, Zan, 5290 Sempeter pri Gorici (SI); KANALEC, Stas, 5212 Dobrovo v Brdih (SI); KOCEVAR, Mitja, 5270 Ajdovscina (SI)
(74) Representative: BRP Renaud & Partner mbB Rechtsanwälte Patentanwälte Steuerberater

(57) **Abstract**

The invention relates to an electrical voltage supply system (1) for a motor vehicle. The voltage supply system (1) comprises an electrical generator (2) having a rotatable rotor, which has an electrical generator output (3) at which an electrical output power (PA) dependent on the rotational speed (n) of the rotor is provided. The voltage supply system (1) comprises a sensor device (7) for determining the instantaneous rotational speed (n) of the rotor. The voltage supply system further comprises a first and second electrical energy storage device (4a, 4b), which are connected to the generator output (3) of the generator (2) via an electrical supply line (5) in order to be supplied with the output power (PA) generated by the generator (2). Thereby, an electrical or electronic switching element (6) of the voltage supply system (1) is arranged in the supply line (5). This switching element (6) can be switched over as a function of the instantaneous speed (n) of the rotor between a first switching state (S1), in which the first energy store (4a) is electrically connected to the generator output (3) of the generator (2), and a second switching state (S2), in which the second energy store (4b) is electrically connected to the generator output (3) of the generator (2).

## Description

The invention relates to an electrical voltage supply system for a motor vehicle and to a motor vehicle having such an electrical voltage supply system. Finally, the invention relates to a method for operating such an electrical voltage supply system.

Electrical voltage supply systems are used to supply electrical on-board networks of motor vehicles with electrical energy.

From EP 1 523 083 A1 an electrical voltage supply system for a motor vehicle is known, in which a single generator is coupled via a switch either to a first on-board network with a lower operating voltage or to a second on-board network with a higher operating voltage. Switching between the two on-board networks can thereby be performed as a function of an electrical power demand of the on-board networks as well as of the electrical charge states of the energy storage devices.

It is an object of the present invention to show new ways in the development of electrical voltage supply systems.

This object is solved by the subject matter of the independent patent claims. Preferred embodiments are the subject matter of the dependent patent claims.

Accordingly, the basic idea of the present invention is to connect an electrical generator of an electrical voltage supply system selectively to a first or a second electrical energy storage device of this system. According to the invention, the switching of this connection takes place in dependence on the instantaneous rotational speed of the rotor of the electrical generator. Since the electrical energy generated by a generator at low rotor speeds is typically less than that generated at high speeds, the energy generated can be effectively used, regardless of the speed, to supply electrical energy to either the first electrical energy storage device or the second electrical energy storage device, depending on the instantaneous speed of the rotor, and thus to charge it.

Thus, electrical energy generated at high rotational speeds of the rotor can be used to supply electrical energy to the electrical energy storage device and electrical energy generated at low rotational speeds can be used to supply electrical energy to the second electrical energy storage device.

An electrical power supply system for a motor vehicle according to the invention includes an electrical generator having a stator and having a rotatable rotor. The generator has an electrical generator output at which an electrical output power dependent on the rotational speed of the rotor can be provided or is provided. The power supply system further comprises a sensor means for determining the instantaneous rotational speed of the rotor. The voltage supply system further comprises a first and a second electrical energy storage device, which can be or are connected to the generator output of the generator via an electrical supply line for supply with the output power generated by the generator. Thereby, an electrical or electronic switching element of the power supply system is arranged in the electrical supply line. This switching element can be switched between a first and a second switching state. In the first switching state, the first electrical energy storage device, but not the second electrical energy storage device, is electrically connected to the generator output of the generator. In the second switching state, the second electrical energy storage device, but not the first electrical energy storage device, is electrically connected to the generator output of the generator. The switching element may be an electrical switch or an electronic switch, preferably a semiconductor switch, particularly preferably a power transistor. The power supply system further comprises with a control/regulation device cooperating with the sensor device for switching the switching element between the first and second switching states. In this case, the switching is performed as a function of the instantaneous rotational speed of the rotor determined by means of the sensor device.

According to a preferred embodiment, the first electrical energy storage device is set up to provide a first electrical supply voltage, in particular to a first electrical on-board network. Accordingly, in this embodiment, the second electrical energy storage device is set up to provide a second electrical supply voltage, in particular to a second electrical on-board network different from the first electrical on-board network. In this case, the second electrical supply voltage is lower than the first electrical supply voltage. Thus, the electrical energy generated at high rotor speeds can be used to charge the first electrical energy storage device and the electrical energy generated at low rotor speeds can be used to charge the second electrical energy storage device.

According to an advantageous further embodiment, the first electrical energy storage device may be electrically connected to the second electrical energy storage device via a DC-DC converter. In this further embodiment, the DC-DC converter provides electrical energy from the first electrical energy storage device to the second electrical energy storage device while reducing the first electrical supply voltage to the second electrical supply voltage. In this way, if necessary, electrical energy stored in the first electrical energy storage device can be used to supply electrical energy to the second electrical energy storage device. This may be particularly necessary and useful if the state of charge of the second electrical energy storage device has fallen below a predetermined minimum threshold value.

According to an advantageous further development, the voltage supply system can have an overcurrent protection by means of which an electrical output power generated by the generator can be limited at least temporarily. In this way, overheating of the electrical generator can be avoided or such overheating can at least be counteracted.

According to another preferred embodiment, the two electrical energy storage devices are configured to be electrically rechargeable by means of the electrical output power of the electrical generator provided at the generator output. Thus, the electrical generator can be used to optionally charge the first or the second electrical energy storage device, so that the electrical energy storage devices can be used to supply electrical voltage to two different electrical on-board networks of a motor vehicle.

According to a further preferred embodiment, the electrical generator is configured such that the electrical output power generated by it increases with increasing rotational speed of the rotor at least in a predetermined rotational speed interval between a lower rotational speed limit and an upper rotational speed limit.

Particularly expediently, the lower speed limit may be 800 rpm. Alternatively, or additionally, the upper speed limit may be 1500 rpm.

The invention further relates to a motor vehicle with an electrical voltage supply system according to the invention presented above, so that the advantages of the electrical voltage supply system according to the invention explained above are transferred to the motor vehicle according to the invention. The motor vehicle according to the invention comprises a first electrical on-board network electrically connected to the first electrical energy storage device of the voltage supply system, and a second electrical on-board network connected to the second electrical energy storage device of the voltage supply system.

Finally, the invention relates to a method for operating a voltage supply system according to the invention presented above, so that the advantages of the electrical voltage supply system according to the invention explained above are transferred to the method according to the invention.

According to the method, the electrical output power generated by the electrical generator is supplied to the first energy storage device in a first operating state of the generator as long as a rotational speed of the rotor is above a predetermined rotational speed threshold. Accordingly, in accordance with the method, the electrical output power generated by the electrical generator is supplied to the second energy storage device in a second operating state of the generator as long as the rotational speed of the rotor does not exceed the predetermined rotational speed threshold. This makes it possible to charge two different electrical energy stores with one and the same electrical generator. It is possible to take advantage of the fact that, in generators, the electrical output power generated generally increases as the rotor speed increases. Thus, the greater amount of electrical energy generated at higher rotor speeds can be supplied to a first electrical energy storage device and the smaller amount of electrical energy generated at lower rotor speeds to a second electrical energy storage device. This proves to be particularly useful if the first electrical energy storage device is configured to provide a first electrical supply voltage that is greater than a second electrical supply voltage to be provided by the second electrical energy storage device.

As a result, in the method according to the invention, the electrical energy generated by the generator is effectively distributed to the two electrical energy storage devices irrespective of the speed.

According to a preferred embodiment of the method according to the invention, the open-loop/closed-loop control device controls the switching element during operation of the generator in such a way that it is in the first switching state in the first operating state of the generator and is in the second switching state in the second operating state of the generator. Thus, at high rotor speeds, the first electrical energy storage device is supplied with electrical energy provided by means of the generator. Correspondingly, at low rotor speeds, the second electrical energy storage device is supplied with the electrical energy provided by the generator.

Particularly preferably, the predetermined speed threshold can be set such that the electrical generator is provided with an electrical output power of between 1.3 kW and 1.6 kW at the electrical generator output at a rotor speed corresponding to the speed threshold.

According to a particularly preferred embodiment of the method, the speed threshold value may lie in a threshold value interval between 3000 rpm and 4500 rpm.

Expediently, the method according to the invention is carried out by the control/regulation device of the power supply system according to the invention.

Further important features and advantages of the invention will be apparent from the sub-claims, from the drawings and from the accompanying figure description based on the drawings.

It is understood that the above features, and those to be explained below, can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

They show, schematically in each case:
- Fig. 1:: an example of a power supply system according to the invention in schematic representation,
- Fig. 2:: an output power/speed diagram illustrating the process according to the invention.

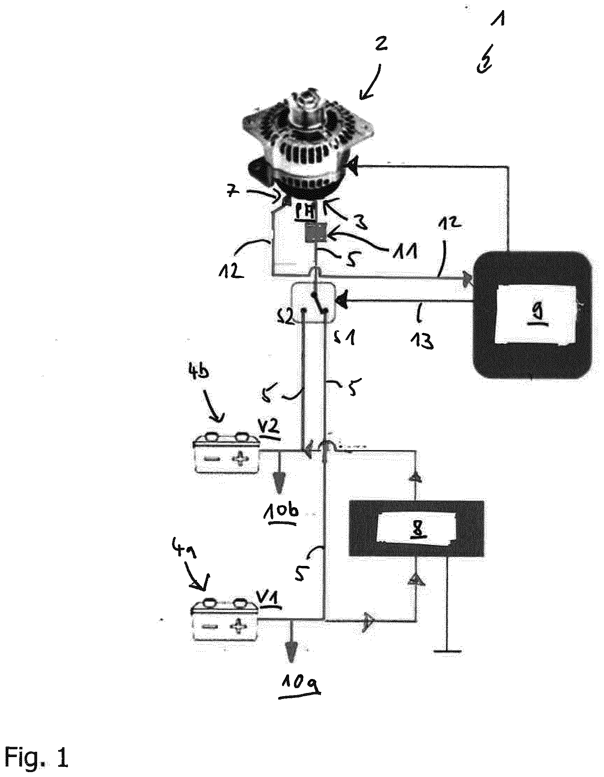

Figure 1 shows in schematic representation an example of an electrical voltage supply system 1 according to the invention, which is also referred to hereinafter in simplified form as "system" 1. The system 1 comprises an electrical generator 2 with a stator and with a rotor (not shown) rotatable relative to the stator. The generator 2 has an electrical generator output 3, at which an electrical output power PA dependent on the rotational speed n of the rotor is provided. The system 1 further comprises a sensor device 7 by means of which an instantaneous rotational speed n of the rotor can be detected. Furthermore, the system comprises a first and a second electrical energy storage device 4a, 4b, which are connected to the generator output 3 of the generator 2 via an electrical supply line 5 for supply with the electrical energy generated by the generator 2. The electric generator 2 is configured such that the electric output power PA generated by it increases at least in a predetermined speed interval ID between a lower speed limit DU and an upper speed limit DO as the speed of the rotor increases, while the individual output voltage levels provided to supply the first and second energy storage 4a, 4b with electrical energy are independent of the rotor speed. This also means that the generator is unable to generate electrical energy for higher voltage levels at low rotor speeds. For example, the lower speed limit DU may be 800 rpm. The upper speed limit DO may be 1500 rpm, for example.

Furthermore, an electrical or electronic switching element 6 is arranged in the supply line 5, which is switchable between a first switching state S1 and a second switching state S2. The switching element can be an electrical switch or an electronic switch, in the latter case in semiconductor switch, in particular a power transistor. In the first switching state S1, in which the first energy store 4a, but not the second energy store 4b is electrically connected to the generator output 3 of the generator 2. In the second switching state S2, the second energy storage 4b, but not the first energy storage 4a is electrically connected to the generator output 3 of the generator 2. The system 1 further comprises a control/regulation device cooperating with the sensor device 7 for switching the switching element 6 between the first and second switching states S1, S2 as a function of the instantaneous rotational speed n of the rotor of the generator 2 determined by means of the sensor device 7.

The first electrical energy storage device 4a is set up to provide a first electrical supply voltage V1 to a first electrical on-board network 10a of a motor vehicle (not shown) not shown in Figure 1 and equipped with the system 1. The second electrical energy storage device 4b is set up to provide a second electrical supply voltage V2 to a second electrical on-board network 10b of this motor vehicle, which is electrically isolated from the first electrical on-board network 10a. In this case, the second electrical energy storage device 4b is smaller than the first electrical supply voltage V1. The first electrical on-board network 10a can be a 48V on-board network. The second electrical on-board network 10b can be a 12V on-board network. The two electrical energy storage devices 4a, 4b are each configured to be electrically rechargeable and can be electrically charged by means of the electrical output power PA of the electrical generator 2 provided at the generator output 3.

As Figure 1 illustrates, the first electrical energy store 4a can be electrically connected to the second electrical energy store 4b via a DC-DC converter 8. By means of the DC-DC converter 8, electrical energy can be provided to the second electrical energy storage 4b from the first electrical energy storage 4a while reducing the first electrical supply voltage V1 to the second electrical supply voltage V2.

Furthermore, the voltage supply system 1 can comprise an overcurrent protection device 11, by means of which an electrical output power PA generated by the generator 2 can be limited at least temporarily.

In the control/regulation device 9 of the system 1, the method according to the invention for operating the system 1 can be executed. According to this method, the electrical output power PA generated by the electrical generator 2 is supplied to the first energy storage device 4a in a first operating state B1 of the generator 2 as long as a rotational speed n of the rotor is above a predetermined rotational speed threshold value ns. The instantaneous speed n of the rotor is thereby determined by means of the sensor device 7 and transmitted to the open-loop/closed-loop control device 9. Likewise, the electrical output power PA generated by the electrical generator 2 is supplied to the second energy storage device 4b in a second operating state B2 of the generator 2 as long as the rotational speed n of the rotor of the generator 2 does not exceed the predetermined rotational speed threshold value ns.

For this purpose, the control/regulating device 9 controls the electrical or electronic switching element 6 during operation of the generator 2 via control line 13 in such a way that it is in the first switching state S1 in the first operating state B1 of the generator 2. Similarly, during operation of the generator 2, the control/regulation device 9 controls the electrical or electronic switching element 6 such that it is in the second switching state S2 in the second operating state B2 of the generator 2. For example, the speed threshold value ns can be in a threshold value interval SI between 3000 rpm and 4500 rpm. In the example scenario, the predetermined speed threshold ns is set such that the electrical generator 2 provides an electrical output power PA of between 1.3 kW and 1.6 kW at an electrical generator output 3 at a rotor speed n corresponding to the speed threshold ns.

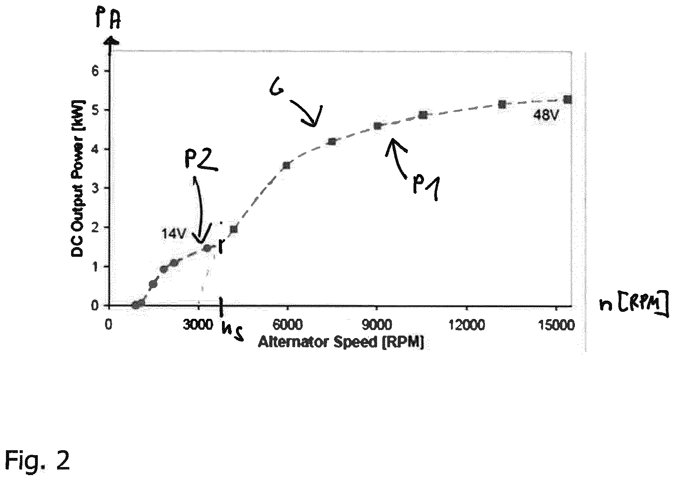

Figure 2 shows a power-speed (P-n) diagram representing the output power (PA) generated by the electrical generator 2 as a function of the rotor speed n. of the electrical generator 2. The graph G shown increases with increasing speed. It can be seen that the output power P1 generated in the speed range n >= ns is greater than the output power P2 in the speed range n < ns.

## Claims

1. Electric power supply system (1) for a motor vehicle,
- having an electrical generator (2) which has a rotatable rotor and has an electrical generator output (3) at which an electrical output power (PA) which is dependent on the rotational speed (n) of the rotor can be provided or is provided,
- with a sensor device (7) for determining the instantaneous speed (n) of the rotor,
- having a first and a second electrical energy store (4a, 4b) which can be connected or are connected to the generator output (3) of the generator (2) via an electrical supply line (5) in order to be supplied with the output power (PA) generated by the generator (2), an electrical or electronic switching element (6) being arranged in the supply line (5) which can be switched between a first switching state (S1), in which the first energy store (4a), but not the second energy store (4b), is electrically connected to the generator output (3) of the generator (2), and a second switching state (S2), in which the second energy store (4b), but not the first energy store (4a), is electrically connected to the generator output (3) of the generator (2),
- having a control/regulating device, which interacts with the sensor device (7), for switching the switching element (6) between the first and second switching states (S1, S2) as a function of the instantaneous rotational speed (n) of the rotor, which is determined by means of the sensor device (4).

2. System according to claim 1,
**characterized in that**
the first electrical energy store (4a) is set up to provide a first electrical supply voltage (V1), in particular to a first electrical on-board network (10a), and the second electrical energy store (4b) is set up to provide a second electrical supply voltage (V2), in particular to a second electrical on-board network (10b) which is electrically isolated from the first electrical on-board network (10a), the second electrical supply voltage (V2) being lower than the first electrical supply voltage (V1).

3. System according to claim 1 or 2,
**characterized in that**
the first electrical energy store (4a) is electrically connected to the second electrical energy store (4b) via a DC-DC converter (8), which provides electrical energy from the first electrical energy store (4a) to the second electrical energy store (4b) while reducing the first electrical supply voltage (V1) to the second electrical supply voltage (V2).

4. System according to claim according to any one of claims 1 to 3,
**characterized in that**
the voltage supply system (1) comprises an overcurrent protection device (11), by means of which an electrical output power (PA) generated by the generator (2) can be limited at least temporarily.

5. System according to one of the preceding claims,
**characterized in that**
the two electrical energy stores (4a, 4b) are configured to be rechargeable by means of the electrical output power (PA) of the electrical generator (2) provided at the generator output (3).

6. System according to one of the preceding claims,
**characterized in that**
the electrical generator (2) is configured such that the electrical output power (PA) generated by it increases at least in a predetermined rotational speed interval (ID) between a lower rotational speed limit (DU) and an upper rotational speed limit (DO) as the rotational speed (n) of the rotor increases.

7. System according to claim 6,
**characterized in that**
the lower speed limit (DU) is 800 rpm; or/and that
the upper speed limit (DO) is 1500 rpm.

8. Motor vehicle,
- having an electrical power supply system (1) according to one of the preceding claims,
- having a first electrical on-board network (10a) electrically connected to the first electrical energy store (4a) and having a second electrical on-board network (10b) electrically connected to the second electrical energy store (4b).

9. Method for operating a voltage supply system (1) according to one of claims 1 to 7,
according to which the electrical output power (PA) generated by the electrical generator (2) is supplied to the first electrical energy store (4a) in a first operating state (B1) of the generator (2) as long as a rotational speed (n) of the rotor is above a predetermined rotational speed threshold (ns) and is supplied to the second electrical energy store in a second operating state (B2) of the generator (2) as long as the rotational speed (n) of the rotor does not exceed the predetermined rotational speed threshold (ns).

10. Method according to claim 9,
**characterized in that**
the open-loop/closed-loop control device (9), during operation of the generator (2), actuates the switching element (6) in such a way that it is in the first switching state (S1) in the first operating state (B1) of the generator and is in the second switching state (S2) in the second operating state (B2) of the generator (9).

11. Method according to claim 9 or 10,
**characterized in that**
the predetermined speed threshold (ns) is set such that the electric generator (2) provides an electric output power (PA) of between 1.3 kW and 1.6 kW at the electric generator output (3) at a speed of the rotor corresponding to the speed threshold (ns).

12. Method according to one of claims 9 to 11,
**characterized in that**
the speed threshold (ns) is in a threshold interval (SI) between 3000 rpm and 4500 rpm.

13. Method according to any one of claims 9 to 12,
**characterized in that**
the method is carried out by the control/regulation device (9) of the voltage supply system (1).
